Europäisches Patentamt

European Patent Office

Office européen des brevets

(11) Veröffentlichungsnummer: **0 465 865 A1**

(12) **EUROPÄISCHE PATENTANMELDUNG**

(21) Anmeldenummer: **91109786.3**

(22) Anmeldetag: **14.06.91**

(51) Int. Cl.⁵: **A47K 11/02**, B60R 15/04

(30) Priorität: **14.06.90 DD 341680**

(43) Veröffentlichungstag der Anmeldung:
**15.01.92 Patentblatt 92/03**

(84) Benannte Vertragsstaaten:
**AT BE CH DE DK ES FR GB GR IT LI LU NL SE**

(71) Anmelder: **KÄLTETECHNIK HORST DECKER**
**Strandstrasse 8**
**O-2063 Malchow(DE)**

(72) Erfinder: **Decker Horst**
**Strandstr. 8**
**O-2063 Malchow(DE)**

(74) Vertreter: **Patentanwälte Beetz sen. - Beetz**
**jun. Timpe - Siegfried - Schmitt-Fumian-**
**Mayr**
**Steinsdorfstrasse 10**
**W-8000 München 22(DE)**

(54) Toilettenanlage zur Lagerung und umweltfreundlichen Entsorgung von Fäkalien.

㊸ Die Fäkalien werden in einem tiefgekühlten Behältnis bzw. geschlossenem Kühlsystem gelagert und ohne chemische Zusätze sowie ohne Verwendung von Spülwasser eingefroren. Die gelagertan Fäkalien werden durch Herausnahme des Behältnisses aus der Toilettenanlage (8) einer umweltfreundlichen Entsorgung zugeführt. Die Toilettenanlage (8) (Gefriertoilette) ist zum Beispiel für Verkrehrstechnische Einrichtungen geeignet.

EP 0 465 865 A1

## Anwendungsgebiet der Erfindung

Die Erfindung bezieht sich auf Toilettenanlagen in denen Fäkalien gelagert werden sowie auf die Entsorgung der Fäkalien. Die Toilettenanlage ist in verkehrstechnischen Einrichtungen, wie z.B. Wohnwagen, Campinganhänger, Boote, Flugzeuge, Busse und Personenzüge der Bahn, auf Baustelleneinrichtungen, Campingplätzen, in Bungalows und überall dort wo eine örtliche Entsorgung von Fäkalien nicht möglich ist, anwendbar.

## Charakteristik des bekannten Stands der Technik

Die Lagerung von Fäkalien in Toilettenanlagen von Verkehrsmitteln, auf Campingplätzen und in Bungalows oder dergleichen sowie deren Entsorgung ist mit hygienischen Problemen und Belastungen der Umwelt verbunden; Ostsee-Zeitung Seite 6 Nr. 77, 31.März/1.April 1990, Nordkurier 05.06.90 Seite 4 "Grüne Finger zählten mit".

Bekannt ist eine Chemikaltoilette für einen Wohnwagen, DE - 052423561, bei der die Fäulnis- bzw. die Geruchsbildung durch den Zusatz von Chemikalflüssigkeit verhindert wird. Die Benutzung der Chemikaltoilette ist dadurch auf ein Minimum, bei einem hohen Spülwasserverbrauch, reduziert und nicht kontinuierlich benutzbar. Ein weiterer Nachteil derartiger Chemikaltoiletten entsteht bei der Entsorgung der Fäkalien, da sie nur an bestimmten Relaisstationen bzw. auf bestimmten Campingplätzen entsorgt werden können. Durch unsachgemäße Dosierung der Chemikalzusätze bzw. durch den Zusatz derartiger Mittel entstehen Schäden an der Natur. Die Chemikalien dringen ins Grundwasser ein und verseuchen Badegewässer und rufen sogar Hautreizungen beim Menschen hervor.

Weiterhin ist eine Abort-Vorrichtung (CH 515021) bekannt, bei der ein Hohlraum (Fäkalienbehälter) unterhalb einer Sitzfläche angeordnet und von einem Verdampfer eines Kältemittelverdichters umgeben ist. Durch eine Ein- und Auslaßöffnung in der Abort-Vorrichtung wird warme Luft vom Kältemittelverdichter und dessen Verflüssigerteil über einen Zwischenraum dem Sitzring des Abortes ständig zugeführt. Das bedeutet, daß die Abort-Vorrichtung durch den Zwischenraum und der Ein- und Auslaßöffnung einem offenen Kühlschrank gleich kommt, dessen Energiebedarf erheblich höher ist. Weiterhin kommt es im Zwischenraum im Berührungsbereich der Warm- und Kaltluft durch die ständige Warmluftzufuhr zur erhöhten Eisbildung, die die Handhabung bei Entleeren sowie die Wärmezufuhr zur Sitzfläche beeinträchtigen bzw. nicht mehr gewährleistet.

Dem Sitzring der Abort-Vorrichtung wird durch erwärmte Luft Wärme zugeführt bzw. eine angemessene Temperatur erteilt, welcher Temperaturbereich gemeint ist und für welchen Zweck bleibt allerdings offen! Mit dem erwärmten Sitzring ist es auch nicht möglich die im Toilettenbeckeninnenraum unterhalb der Sitzfläche befindliche Luftschicht zu erwärmen und für den menschlichen Körper eine behagliche Temperatur zu schaffen.

Ebenfalls wird die Kältestrahlung aus dem Hohlraum in Richtung Sitzfläche nicht absorbiert.

Die erwärmte Luft wird durch eine erzwungene Luftströmung mit Hilfe eines Zwischenraumes an der Sitzfläche vorbeigeführt. Das bedeutet aber, daß sich der menschliche Körper während der Benutzung im inneren Sitzflächenbereich in einer Luftströmung befindet, die nicht zur Behaglichkeit beiträgt bzw. nicht zum längeren verweilen einlädt. Bei einem Stromausfall tritt spätestens nach 48 Stunden durch das offene Kühlsystem (Abortvorrichtung) eine Geruchsbelästigung ein.

## Ziel der Erfindung

Ziel der Erfindung ist es Fäkalien einer Toilettenanlage mit geringem Aufwand umweltfreundlich zu entsorgen.

## Darlegung des Wesens der Erfindung

Der Erfindung liegt die Aufgabe zugrunde, Fäkalien in einer kontinuierlich benutzbaren Toilettenanlage hygienisch zu lagern und umweltfreundlich zu entsorgen.

Erfindungsgemäß wird das mit einer transportablen und ortsveränderlichen Toilettenanlage, zur Lagerung und umweltfreundlichen Entsorgung von Fäkalien, bestehend aus einer Halterung mit einer Sitzfläche für den menschlichen Körper und einem Toilettendeckel, einem unterhalb der Sitzfläche befindlichen Lagerbehälter für Fäkalien, der von einem Verdampfer eines Kältemittelverdichters umgeben ist sowie eines mit dem Verdampfer verbundenen Verflüssigerteils, dadurch erreicht, daß der Lagerbehälter bei geschlossenen Toilettendeckel als geschlossenes Kühlsystem unterhalb der Sitzfläche angeordnet ist. Das Verflüssigerteil des Kältemittelverdichters ist in und/oder außerhalb der Sitzfläche im geschlossenen und geöffneten Kühlsystem der Toilettenanlage angeordnet. Durch das Öffnen des Toilettendeckels wird das geschlossene Kühlsystem geöffnet.

Der Verdampfer kühlt den Lagerbehälter bis auf max. -25° C. Der Lagerbehälter kann aus Aluminium, Plaste oder Niro bestehen. Das Verflüssigerteil des Kältemittelverdichters ist in und/oder außerhalb der Sitzfläche der Toilettenanlage, je nach Wärmebedarf zur Schaffung einer für den menschlichen Körper im Sitzbereich angenehmen Behaglichkeitstemperatur, angeordnet, Für eine kompakte, transportable und ortsveränderliche Toilettenanlage ist die Halterung gleichzeitig ein Gehäuse aus Kunststoff und/oder Metall, das die gesamte Toilettenanlage beinhaltet.

Bei derartigen Toilettenanlagen ist der Lagerbehälter direkt oder indirekt unter der Sitzfläche und des Toilettenbeckeninnenraumes angeordnet. Die direkte oder indirekte Anordnung des Lagerbehälters unter der Sitzfläche ist abhängig von der Gestaltung des Toilettenbeckeninnenraumes zur Führung der Fäkalien in das tiefgekühlte Lagerbehältnis. Die Abmessungen des Gehäuses derartiger Toilettenanlagen überschreiten nicht die Abmessungen bekannter Chemotoiletten, so daß sie ohne großen Aufwand eingebaut bzw. ausgetauscht werden können.

Die Fäkalien werden nach dem Ausscheiden aus dem menschlichen Körper in das tiefgekühlte Behältnis eingelagert. Das kann auf direktem und oder indirektem Wege geschehen. Direkt, indem die Fäkalien ohne Umweg in das tiefgekühlte Behältnis gelangen bzw. fallen.

Bei entsprechender Gestaltung des Toilettenbeckeninnenraumes mit Leitflächen oder Umlenkelementen gelangen die Fäkalien direkt und/oder indirekt in das tiefgekühlte Behältnis. Durch die Anwendung von Zuführungsrohren ist es auch möglich den tiefgekühlten Lagerbehälter außerhalb des Gehäuses zur besseren hygienischen und handhabbaren Entsorgung anzuordnen. Der Lagerbehälter ist kassettenartig aus der Toilettenanlage mit geringem Aufwand horizontal oder vertikal je nach Anordnung des Verdampfers entnehmbar.

Der Kältemittelverdichter kann durch bekannte elektronische Anpassungseinheiten mit Bordspannungsnetzen und öffentlichen Stromversorgungsanlagen betrieben werden. Durch einen Temperaturwächter wird die Temperatur im Lagerbehälter überwacht und der Kältemittelverdichter gesteuert. Weiterhin wird durch das Verflüssigerteil die im Toilettenbeckeninnenraum unterhalb der Sitzfläche der Toilettenanlage befindliche Luftschicht angewärmt, die die Kältestrahlung vom tiefgekühlten Lagerbehälter in Richtung Sitzfläche absorbiert und die Behaglichkeitstemperatur im Sitzflächenbereich bzw. im Toilettenbeckeninnenraum für den menschlichen Körper ohne Zugluft gewährleistet. Die Fäkalien werden im Lagerbehälter bei geschlossenem Toilettendeckel in einem geschlossenen Kühlsystem gelagert. Der Bereich unterhalb der Sitzfläche wird durch die Wärmestrahlung des Verflüssigerteils im geschlossenen Kühlsystem und bei geöffnetem Toilettendeckel zur Schaffung einer angenehmen Behaglichkeitstemperatur im Sitzbereich des menschlichen Körpers direkt erwärmt. Durch die Maßnahme der direkten Erwärmung im Sitzbereich des menschlichen Körpers ist die Toilettenanlage kontinuierlich benutzbar. Der Energieverbrauch der Toilettenanlage wird durch das geschlossene Kühlsystem wesentlich gesenkt.

Bei Erreichung des Füllstandes des Lagerbehälters mit tiefgefrorenen Fäkalien oder bei Bedarf wird der Lagerbehälter zur Entsorgung der tiefgekühlten Fäkalien aus dem Gehäuse entnommen und die Fäkalien einer Relaisstation übergeben, oder in einer Kanalisation eingeleitet oder ins Erdreich unter Beachtung umweltlicher bzw. gesetzlicher Bestimmungen und Vorschriften vergraben.

Die erfindungsgemäße Toilettenanlage ist kontinuierlich benutzbar und zeichnet sich durch eine einfache Handhabung zur Benutzung und Entsorgung bei geringem Wartungs- und Energieaufwand aus. Ebenfalls werden die hygienischen Bedingungen, keine Geruchsbelästigung und kein Kontakt mit Fäkalien bei der Entsorgung, wesentlich verbessert. Dazu trägt auch ein verrottbarer Plastsack bei, der im Lagerbehälter zur Aufnahme der Fäkalien eingebracht und zur Entsorgung im Erdreich mitvergraben wird.

Mit der erfindungsgemäßen Toilettenanlage (Gefriertoilette) wird es möglich Fäkalien hygienisch und ohne chemische Zusätze über einen längeren Zeitraum (mehrere Wochen) zu lagern und umweltfreundlich zu entsorgen.

Der Toilettendeckel bzw. das Kühlsystem für die Fäkalien ist nach der Benutzung zu schließen, um den Energieverbrauch des Kältemittelverdichters nicht unnötig zu erhöhen. Bei Stromausfall ist die Garantie gegeben durch das geschlossene Kühlsystem Fäkalien bis zu 100 Stunden ohne Geruchsbelästigung aufzubewahren.

Ausführungsbeispiel

Die Erfindung soll anhand eines Ausführungsbeispieles näher erläutert werden.

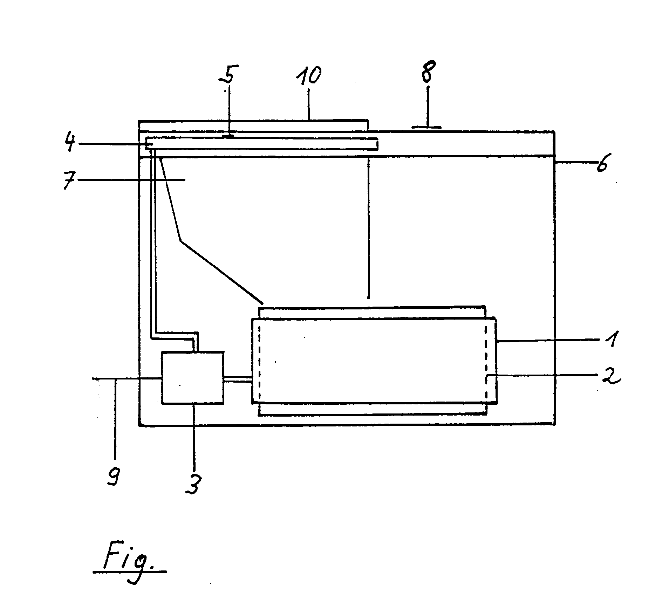

Es zeigt die Figur eine Prinzipdarstellung einer Gefriertoilette.

Die Gefriertoilette 3, die in einem Wohnwagen angeordnet ist, besteht aus einem Plast-Gehäuse 6, 470 mm lang, 380 mm breit und 425 mm hoch, mit einer Sitzfläche 5 und einem Toilettendeckel 10. Im Gehäuse 6 unter der Sitzfläche 5 ist ein 45 Liter Lagerbehälter 1 aus Aluminium zur Aufnahme von Fäkalien angeordnet. Der Lagerbehälter 1 ist von einem Verdampfer 2 eines Kältemittelverdichters 3 umgeben. Das Verflüssigerteil 4 des Kältemittelverdichters 3 ist unter der Sitzfläche 5 und außerhalb der Toilettenanlage angeordnet. Der Kältemittelverdichter 3 ist an einem Akkumulator 12 V 48 Ah angeschlossen. Durch einen Adapter ist ein Netzanschluß 220 V möglich. Der Verdampfer 2 kühlt den Lagerbehälter 1, in dem ein verrottbarer Plastesack zur Aufnahme der Fäkalien eingebracht ist bis max. -18 °C; mit Hilfe eines Temperaturwächters wird die Temperatur im Lagerbehälter 1 bzw. im Plastesack in einem Bereich von -15˚C bis -18˚C gehalten. Bei Benutzung der Gefriertoilette fallen die Fäkalien direkt oder indirekt in den tiefgekühlten Lagerbehälter 1.

Das Verflüssigerteil 4 bzw. die Verflüssigerleitung des Kältemittelverdichters 3 schafft durch die direkte Wärmeabgabe im Sitzflächenbereich 5 eine für den menschlichen Körper behagliche Temperatur. Diese behagliche Temperatur ist ständig ohne Zugluft vorhanden, sowohl bei geschlossenem Toilettendeckel 10 als auch bei geöffentem Toilettendeckel 10.

Die Fäkalien werden im Lagerbehälter 1 ohne chemische Zusätze eingelagert und eingefroren. Der Toilettendeckel 10 ist nach der Benutzung zu schließen, um unnötigen Energieverbrauch für den Kältemittelverdichter zu vermeiden. Zur umweltfreundlichen Entsorgung der tiefgefrorenen Fäkalien, bei Erreichen des Füllstandes des Plastesakkes wird das Gehäuse 6 im Sitzflächenbereich deckelartig aufgeklappt und der Plastesack mit den tiefgefrorenen Fäkalien aus der Gefriertoilette 8 herausgeholt und im Erdreich vergraben bzw. umweltfreundlich entsorgt.

Auflistung der verwendeten Bezugszeichen

1. Lagerbehälter
2. Verdampfer
3. Kältemittelverdichter
4. Verflüssigerteil
5. Sitzfläche
6. Gehäuse
7. Toilettenbeckeninnenraum
8. Toilettenanlage (Gefriertoilette)
9. Netzanschluß
10. Toilettendeckel

**Patentansprüche**

1. Toilettenanlage zur Lagerung und umweltfreundlichen Entsorgung von Fäkalien, bestehen aus einer Halterung mit einer Sitzfläche für den menschlichen Körper, einem Toilettendeckel sowie einem unterhalb der Sitzfläche befindlichen Lagerbehälter für Fäkalien, **gekennzeichnet dadurch**, daß der Lagerbehälter (1) von einem Verdampfer (2) eines Kältemittelverdichters (3) umgeben ist und das Verflüssigerteil (4) des Kältemittelverdichters (3) in und/oder außerhalb der Sitzfläche (5) der Toilettenanlage (8) angeordnet ist und daß es sich um ein geschlossenes Kühlsystem handelt.

2. Toilettenanlage nach Anspruch 1, gekennzeichnet dadurch, daß die Halterung ein Gehäuse (6) ist und der Kältemittelverdichter (3) sowie der Lagerbehälter (1), der sich direkt oder indirekt unter der Sitzfläche (5) der Toilettenanlage (8) befindet, im Gehäuse (6) angeordnet sind.

3. Toilettenanlage nach Anspruch 1 und 2, gekennzeichnet dadurch, daß der Lagerbehälter (1) und der Verdampfer (2) außerhalb des Halterungsbereiches angeordnet wird.

4. Toilettenanlage nach Anspruch 1, 2 und 3, gekennzeichnet dadurch, daß der Lagerbehälter (1) eine auswechselbare Kassette ist.

5. Toilettenanlage nach Anspruch 1, 2, 3 und 4, gekennzeichnet dadurch, daß der menschliche Körper im Sitzbereich der Sitzfläche (5) von einem Behaglichkeitstemperaturbereich umgeben ist.

4. Toilettenanlage nach Anspruch 3, gekennzeichnet dadurch, daß die Halterung ein Gehäuse (6) ist und der Kältemittelverdichter (3) sowie der Lagerbehälter (1), der sich direkt oder indirekt unter der Sitzfläche (5) der Toilettenanlage (8) befindet, im Gehäuse (6) angeordnet sind.

5. Toilettenanlage nach Anspruch 3 und 4, gekennzeichnet dadurch, daß der Lagerbehälter (1) und der Verdampfer (2) außerhalb des Halterungsbereiches angeordnet wird.

6. Toilettenanlage nach Anspruch 3, 4 und 5, gekennzeichnet dadurch, daß der Lagerbehälter (1) eine auswechselbare Kassette ist.

7. Toilettenanlage nach Anspruch 3, 4, 5 und 6, gekennzeichnet dadurch, daß der menschliche Körper im Sitzbereich der Sitzfläche (5) von einem Behaglichkeitstemperaturbereich umgeben ist.

Fig.

**Europäisches Patentamt**

# EUROPÄISCHER RECHERCHENBERICHT

Nummer der Anmeldung

**EP 91 10 9786**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | CH-A-515 021   (TE BE-ELPRODUKTER AB) <br> * Spalte 1, Zeile 22 - Zeile 37 * * Spalte 2, Zeile 9 - Spalte 3, Zeile 3; Abbildung 1 * <br> – – – | 1-5 | A 47 K 11/02 <br> B 60 R 15/04 |
| A | US-A-4 355 521   (YUNG-TING TSAI) <br> – – – | | |
| A | FR-A-987 661   (SVENSKA TURBINFABRIKS) <br> – – – | | |
| A | US-A-4 356 706   (R. BAUMGARTEN) <br> – – – – – | | |

RECHERCHIERTE SACHGEBIETE (Int. Cl.5)

A 47 K
B 60 R
F 25 B

Der vorliegende Recherchenbericht wurde für alle Patentansprüche erstellt

| Recherchenort | Abschlußdatum der Recherche | Prüfer |
|---|---|---|
| Den Haag | 04 September 91 | KAPPOS A. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------
& : Mitglied der gleichen Patentfamilie, übereinstimmendes Dokument